(19) Europäisches Patentamt
European Patent Office
Office européen des brevets

(11) **EP 2 755 045 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(51) Int Cl.:
*G01S 13/42* *(2006.01)*     *G01S 13/58* *(2006.01)*
*G01S 13/93* *(2006.01)*     *G01S 13/34* *(2006.01)*

(21) Anmeldenummer: **13193783.1**

(22) Anmeldetag: **21.11.2013**

(54) **Verfahren zur zyklischen Messung von Abständen und Geschwindigkeiten von Objekten mit einem FMCW-Radarsensor**

Method for the cyclic measuring of distances and speeds of objects with an FMCW radar sensor

Procédé de mesure cyclique de distances et de vitesses d'objets à l'aide d'un détecteur radar à onde continue à fréquence modulée (FMCW)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.01.2013 DE 102013200404**

(43) Veröffentlichungstag der Anmeldung:
**16.07.2014 Patentblatt 2014/29**

(73) Patentinhaber: **ROBERT BOSCH GMBH**
**70442 Stuttgart (DE)**

(72) Erfinder:
• **Kirsch, Andreas**
  **71229 Leonberg (DE)**
• **Schoor, Michael**
  **70195 Stuttgart (DE)**

(56) Entgegenhaltungen:
**EP-A1- 1 925 948**     **WO-A2-02/31529**
**US-A- 5 309 160**     **US-B1- 6 492 938**

EP 2 755 045 B1

**Beschreibung**

Die Erfindung betrifft ein Verfahren zur zyklischen Messung von Abständen und Geschwindigkeiten von Objekten mit einem FMCW-Radarsensor, bei dem ein Sendesignal des Radarsensors periodisch in seiner Frequenz moduliert wird, wobei jede Periode mindestens zwei voneinander verschiedene Modulationsmuster enthält, aus einem für ein einzelnes Modulationsmuster empfangenen Signal eine Beziehung zwischen Abstand und Geschwindigkeit des Objekts hergeleitet wird, und die für mehrere Modulationsmuster erhaltenen Signale miteinander abgeglichen werden, um in jedem Messzyklus je einen Wert für den Abstand und die Geschwindigkeit zu bestimmen.

STAND DER TECHNIK

Radarsensoren werden in Fahrerassistenzsystemen für Kraftfahrzeuge eingesetzt, wie beispielsweise in ACC-Systemen (Adaptive Cruise Control) oder Sicherheitssystemen, etwa Kollisionswarnsystemen, und dienen dazu, die Positionen und Relativgeschwindigkeiten von Objekten zu bestimmen, so dass eine Fahrsituation erkannt werden kann. Beispielsweise kann bei einem ACC-System im Rahmen einer adaptiven Geschwindigkeitsregelung die Geschwindigkeit des eigenen Fahrzeugs an die Geschwindigkeit eines vorausfahrenden Fahrzeugs angepasst und der Abstand zu dem vorausfahrenden Fahrzeug auf einen geeigneten Wert geregelt werden. Ein Sicherheitssystem kann beispielsweise dazu eingerichtet sein, automatisch einen Bremsvorgang einzuleiten, wenn die Gefahr einer unmittelbar bevorstehenden Kollision erkannt wird.

Es sind FMCW-(Frequency Modulated Continuous Wave)-Radarsensoren bekannt, beispielsweise aus US6492938 und WO0231529, bei denen die Sendefrequenz eines kontinuierlichen Radarsignals rampenförmig moduliert wird. Aus einem Empfangssignal wird durch Mischen mit dem Sendesignal ein Basisbandsignal erzeugt, welches dann ausgewertet wird.

Bei einem FMCW-Radarsensor zeichnet sich jedes Radarobjekt im Frequenzspektrum des Basisbandsignals in der Form eines Peaks ab, dessen Lage von der Dopplerverschiebung und der Laufzeit der Radarsignale abhängig ist, so dass aus dem einer Frequenzmodulationsrampe zugeordneten Basisbandsignal noch keine eindeutige Bestimmung der Relativgeschwindigkeit und des Abstands möglich ist. Vielmehr legt die Frequenz eines erhaltenen Peaks eine Beziehung zwischen der Geschwindigkeit (Relativgeschwindigkeit) und dem Abstand in Form eines linearen Zusammenhangs fest.

Der Begriff "linear" wird im folgenden so verstanden, dass der dadurch bezeichnete Zusammenhang einen linearen Faktor und einen additiven Term umfassen kann.

Beim FMCW-Verfahren sind zur Identifizierung mehrerer Radarobjekte und Schätzung ihrer Relativgeschwindigkeiten und Abstände mehrere Frequenzmodulationsrampen mit unterschiedlichen Rampensteigungen erforderlich. Durch Abgleichen der unterschiedlichen, bei den einzelnen Frequenzrampen erhaltenen Beziehungen können die Relativgeschwindigkeit v und der Abstand d eines Radarobjektes berechnet werden. Dieser Abgleich wird auch als Matching bezeichnet und entspricht einer Suche von Schnittpunkten von Geraden im d-v-Raum. Das FMCW-Verfahren ist besonders effizient, wenn nur wenige Radarobjekte erfasst werden.

Es sind auch Radarsensoren bekannt, die nach dem Verfahren der Chirp-Sequence-Modulation arbeiten, bei dem das Sendesignal aus einer Folge gleichartiger, frequenzmodulierter Signalpulse (Chirps) besteht. Das Modulationsmuster besteht folglich nicht aus einer einzelnen Modulationsrampe, sondern aus einem kompletten Satz aufeinanderfolgender Chirps. Es handelt sich um ein Puls-Dopplerverfahren, bei dem zunächst eine Trennung der Radarobjekte nach ihren Entfernungen erfolgt und anschließend, anhand der Unterschiede von Phasenlagen zwischen den Reflexionen der einzelnen Signalpulse, Ortsveränderungen und damit Geschwindigkeiten der Radarobjekte ermittelt werden.

Bei bekannten FMCW-Verfahren stimmt die Zykluszeit, d.h., die Dauer eines einzelnen Messzyklus, mit der Periodendauer der Frequenzmodulation überein. Innerhalb eines Messzyklus wird eine bestimmte Anzahl von Frequenzmustern gesendet, und die empfangen Signale für alle empfangenen Frequenzmuster werden aufgezeichnet und ausgewertet. Die Zykluszeit setzt sich deshalb zusammen aus der Zeit, die zum Senden der Frequenzmuster benötigt wird, und einer zusätzlichen Rechenzeit, die ein Prozessor zur Verarbeitung der empfangenen Signale und zur Berechnung der Abstands- und Geschwindigkeitsdaten benötigt.

Bei sicherheitsrelevanten Assistenzfunktionen ist es jedoch wichtig, dass das Verkehrsgeschehen mit möglichst hoher zeitlicher Auflösung verfolgt werden kann Das heißt, die Zykluszeit sollte möglichst klein sein. Da sich die Dauer der Modulationsmuster aus Gründen der Messgenauigkeit nicht verkürzen lässt, kann eine Verkürzung der Zykluszeit nur durch eine Verkürzung der Rechenzeit erreicht werden. Das erfordert den Einsatz leistungsfähigerer und damit kostspieligerer Prozessoren.

OFFENBARUNG DER ERFINDUNG

Aufgabe der Erfindung ist es, ein Verfahren anzugeben, das bei gegebener Rechenleistung eine Verkürzung der Zykluszeit ermöglicht und bei gegebener Zykluszeit eine Verlängerung der für die Auswertung zur Verfügung stehenden Zeit und damit den Einsatz preisgünstigerer Prozessoren erlaubt.

Diese Aufgabe wird erfindungsgemäß dadurch gelöst, dass man für den Abgleich des für ein Modulationsmuster im aktuellen Messzyklus erhaltenen Signals mit dem oder den für andere Modulationsmuster erhaltenen Signalen auf die Signale aus mindestens einem früheren Messzyklus zurückgreift.

Die Erfindung nutzt den Umstand aus, dass sich aufgrund der Trägheit der beteiligten Kraftfahrzeuge die Geschwindigkeiten von Messzyklus zu Messzyklus nur wenig ändern, so dass es im wesentlichen nur die Abstände sind, die von einem Messzyklus zum nächsten eine signifikante Änderung erfahren. Die Geschwindigkeitsinformation wird deshalb nicht wesentlich verfälscht, wenn man statt der Daten aus dem aktuellen Messzyklus Daten aus einem oder mehreren unmittelbar vorangegangenen Messzyklen verwendet. Wenn mit N verschiedenen Modulationsmustern gearbeitet wird, M die zum Senden eines einzelnen Modulationsmusters benötigt Zeit ist und T die zur Auswertung eines einzelnen Modulationsmusters benötigte Rechenzeit ist, so ist bei dem herkömmlichen Verfahren die Zykluszeit Z gegeben durch:

$$Z = N*(M+T).$$

Bei dem erfindungsgemäßen Verfahren lässt sich dagegen die Zykluszeit verkürzen auf:

$$Z = M+T$$

indem man beim Abgleich auf die Ergebnisse auf den letzten (N-1) Messzyklen zurückgreift.

Es ergibt sich also eine Verkürzung der Zykluszeit um (N-1)*(M+T).

Diese Verkürzung der Zykluszeit hat wiederum zur Folge, dass auch der zeitliche Abstand zwischen den verschienen Modulationsmustern entsprechend klein ist, wodurch sich der Fehler in den Geschwindigkeitsdaten weiter verringert.

Vorteilhafte Ausgestaltungen der Erfindung sind in den Unteransprüchen angegeben.

Besonders vorteilhaft ist die Erfindung bei FMCW-Verfahren, die mit dem oben erwähnten Prinzip der Chirp-Sequence-Modulation arbeiten. Da bei diesen Verfahren die Geschwindigkeitsinformation aus den Unterschieden in der Phasenlage der für aufeinanderfolgende Modulationsmuster erhaltenen Signale gewonnen wird, ist der einschränkende Faktor nicht so sehr die Genauigkeit, mit der die Geschwindigkeit bestimmt werden kann, sondern vielmehr eine Mehrdeutigkeit, die aus dem Nyquist-Shannon-Abtastkriterium folgt. Da sich die Phasenlage der Signale periodisch ändert, das Signal jedoch nur punktuell mit einer bestimmten Abtastfrequenz abgetastet wird, lässt sich bei hohen Geschwindigkeiten für eine gegebene Änderung der Phase $\varphi$ nicht mehr ausschließen, dass die "wahre" Phasenänderung $\varphi + 2\pi$ oder $\varphi + 4\pi$, etc. betragen hat. Man erhält also einen Satz von möglichen Geschwindigkeiten, die durch ein festes Geschwindigkeitsintervall voneinander getrennt sind. Bei dem erfindungsgemäßen Verfahren wird dann das Matching dadurch wesentlich erleichtert, dass praktisch ausgeschlossen werden kann, dass sich die Geschwindigkeit eines Objekts in der kurzen Zeitspanne von einem Messzyklus zum nächsten um ein ganzes Geschwindigkeitsintervall (entsprechend der Phasenänderung $2\pi$) geändert hat.

KURZBESCHREIBUNG DER ZEICHNUNGEN

Ausführungsbeispiele der Erfindung werden in der nachfolgenden Beschreibung anhand der Zeichnungen näher erläutert.

Es zeigen:

Fig. 1 ein schematisches Blockschaltbild eines Radarsensorsystems für Kraftfahrzeuge;

Fig. 2 eine schematische Darstellung einer Folge von Frequenzmodulationsrampen (Chirps) eines Sendesignals;

Fig. 3 eine schematische Darstellung von Amplitude und Phasenlage eines Frequenzspektrums eines Teilsignals;

Fig. 4 eine schematische Darstellung von Werten von Frequenzspektren von Teilsignalen bei einer gegebenen Frequenzlage;

Fig. 5 eine schematische Darstellung von Beziehungen zwischen einer Relativgeschwindigkeit v und einem Abstand d eines Radarobjektes aus einer Auswertung von Teilsignalen, die einer Folge von gleichartigen Frequenzrampen zugeordnet sind;

Fig. 6 eine schematische Darstellung zur Erläuterung eines Abgleichs unterschiedlicher ermittelter Beziehungen zwischen v und d aus Teilsignalen, die zwei Folgen von Frequenzrampen zugeordnet sind;

Fig. 7 ein Beispiel eines Zyklusschemas für das erfindungsgemäße Verfahren;

Fig. 8 ein Vergleichsbeispiel eines Zyklusschemas; und

Fig. 9 eine vergrößerte Darstellung analog zu Fig. 6, zur Illustration eines Abgleichs zwischen drei verschiedenen Modulationsmustern bei dem erfindungsgemäßen Verfahren.

DETAILLIERTE BESCHREIBUNG VON AUSFÜHRUNGSBEISPIELEN

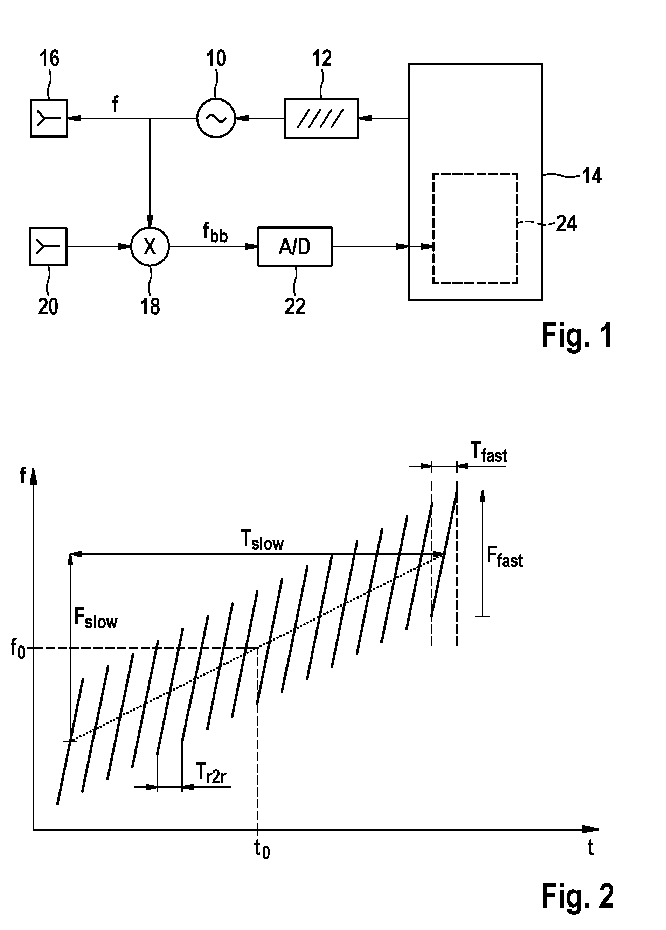

Fig. 1 zeigt schematisch den Aufbau eines Radarsensorsystems für Kraftfahrzeuge. Das System umfasst einen spannungsgesteuerten Hochfrequenz-(HF)-Oszillator 10 zur Erzeugung eines Sendesignals. Die Frequenz des HF-Oszillators 10 wird von einer Frequenzmodulationseinrichtung 12 gesteuert, die wiederum von einer Steuer- und Auswerteeinheit 14 gesteuert wird. Ein Ausgang des HF-Oszillators 10 ist mit wenigstens einem Sendeantennenelement 16 verbunden, um ein Sendesignal des Radarsensorsystems abzustrahlen.

Weiterhin ist ein Ausgang des HF-Oszillators 10 mit einem Mischer 18 verbunden. Dieser ist dazu eingerichtet, ein von einem Empfangsantennenelement 20 empfangenes Empfangssignal mit dem Sendesignal zu mischen, um ein Messsignal in Form eines Basisbandsignals zu erzeugen. Das Basisbandsignal wird durch einen Analog-Digital-Umwandler 22 digitalisiert und der Steuer- und Auswerteeinheit 14 zugeführt. Das Mischen und Digitalisieren erfolgt unter Erhalt der Phasenbeziehungen zwischen dem Sendesignal und dem empfangenen Signal. Die Steuer- und Auswerteeinheit 14 umfasst eine digitale Signalverarbeitungseinheit 24 zur Auswertung des zeitlichen Verlaufes der Frequenz des Basisbandsignals.

Die Frequenzmodulationseinrichtung 12 ist dazu eingerichtet, das Sendesignal periodisch mit einem Folge von Modulationsmustern zu modulieren. In dem hier betrachteten Beispiel besteht jedes Modulationsmuster in einer Folge von Frequenzrampen (Chirps) gleicher Steigung und gleichen Hubs.

In Fig. 2 ist die Frequenz f eines Sendesignals über der Zeit t dargestellt, beispielhaft anhand einer Folge von Frequenzrampen, die jeweils einen Hub $F_{fast}$ und eine Zeitdauer $T_{fast}$ aufweisen. Die einzelnen Frequenzrampen folgen aufeinander mit einem zeitlichen Abstand $T_{r2r}$ ("ramp-to-ramp"). In dem in Fig. 2 gezeigten Beispiel ist $T_{fast}$ gleich $T_{r2r}$, so dass die einzelnen Frequenzrampen unmittelbar aufeinander folgen.

Fig. 2 zeigt eine allgemeine Darstellung, bei der sich die Mittenfrequenz der einzelnen Frequenzrampen, die im folgenden auch als schnelle Rampen bezeichnet werden, im Verlaufe der Folge ändert. Insbesondere beschreibt die Mittenfrequenz der schnellen Rampen ihrerseits eine lineare Frequenzrampe mit der Mittenfrequenz $f_0$ zum Zeitpunkt $t_0$. Diese Frequenzrampe wird im folgenden auch als langsame Rampe bezeichnet. Sie hat einen Frequenzhub $F_{sLow}$ bei einer Rampendauer $T_{sLow}, = (N_{slow}-1) * T_{r2r}$, wobei $N_{slow}$ die Anzahl der schnellen Rampen bezeichnet.

In dem Fall, dass die langsame Rampe den Frequenzhub 0 hat, sind die schnellen Rampen der Folge identisch, d.h. beschreiben identische Frequenzverläufe.

In einer Modulationsperiode werden zwei oder mehr sich unterscheidende Folgen von schnellen Rampen verwendet, wobei innerhalb der jeweiligen Folge die schnellen Rampen (Chirps) jeweils den gleichen Frequenzhub $F_{fast}$ und die gleiche Rampendauer $T_{fast}$ und denselben zeitlichen Abstand $T_{r2r}$ zwischen den Rampen aufweisen. Die wenigstens zwei Folgen innerhalb einer Modulationsperiode können sich beispielsweise unterscheiden durch unterschiedliche Werte des Betrages und/oder des Vorzeichens des Frequenzhubes $F_{fast}$ der schnellen Rampen, unterschiedliche Rampendauern der schnellen Rampen, unterschiedliche Rampenwiederholzeiten $T_{r2r}$ der schnellen Rampen, unterschiedliche Mittenfrequenzen $f_0$ der langsamen Rampen, unterschiedliche Anzahl $N_{slow}$ der schnellen Rampen und/oder unterschiedliche Frequenzhübe $F_{slow}$ der langsamen Rampe.

Im folgenden wird zunächst zur Vereinfachung der Darstellung die Auswertung des Messsignals für eine einzelne Folge von schnellen Rampen des Sendesignals erläutert.

Die Frequenz des Sendesignals liegt beispielsweise im Bereich von 76 GHz. Beispielsweise kann die Mittenfrequenz der langsamen Rampe 76 GHz betragen.

In dem vom Mischer 18 gelieferten Basisbandsignal ist jeder schnellen Rampe in der Folge ein Teilsignal mit der Dauer $T_{fast}$ zugeordnet. Dabei kann davon ausgegangen werden, dass für ein Radarobjekt im Erfassungsbereich des Radarsensorsystems die Signallaufzeit klein gegenüber der Rampendauer $T_{fast}$ ist.

In einem ersten Schritt der Auswertung wird ein Frequenzspektrum wenigstens eines Teilsignals ausgewertet. Das Teilsignal des Basisbandsignals, welches einer schnellen Rampe entspricht, wird an einer Anzahl $N_{fast}$ äquidistanter Zeitpunkte abgetastet, also digitalisiert, und ein Frequenzspektrum des Teilsignals wird bestimmt. Das Frequenzspektrum wird beispielsweise durch Berechnen einer schnellen Fouriertransformation (FFT) berechnet.

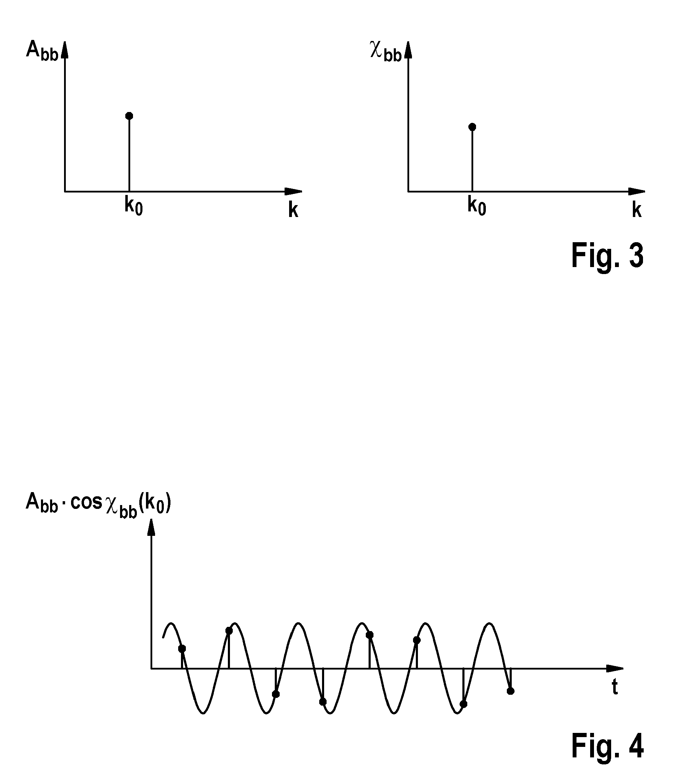

Fig. 3 zeigt schematisch über dem Frequenzbin k aufgetragen die Amplitude $A_{bb}$ und die Phase $\chi_{bb}$ des erhaltenen komplexen Frequenzspektrums in Polarkoordinaten.

Für ein von einem einzelnen Radarobjekt reflektiertes Signal wird beispielsweise im Frequenzbin $k_0$ ein Peak mit der Amplitude $A_{bb}(k_0)$ erhalten, dem eine entsprechende Phase $\chi_{bb}(k_o)$ zugeordnet ist. Der Frequenzbin $k_0$ kennzeichnet dabei die Frequenzlage des Radarobjektes in dem betreffenden Frequenzspektrum des Teilsignals.

Bei einer linearen Frequenzmodulation des Sendesignals ist die Frequenzlage eines einem Radarobjekt zugeordneten Peaks aus einer Summe zweier Terme zusammengesetzt, von denen der erste Term proportional zum Produkt aus dem Abstand d des Radarobjekts vom Radarsensor und dem Rampenhub $F_{fast}$ ist und der zweite Term proportional zum Produkt aus der Relativgeschwindigkeit v des Radarobjektes, der Mittenfrequenz der schnellen Rampe und der Rampendauer

$T_{fast}$ ist. Dies entspricht der FMCW-Gleichung

$$k_o = (2/c)\,(d_{0,r}\,F_{fast} + f_{0,r}\,v_{0,r}\,T_{fast}),$$

wobei c die Lichtgeschwindigkeit ist, $d_{0,r}$ der Objektabstand zum Mittenzeitpunkt der r-ten Rampe ist, mit r=1,2, ...,$N_{slow}$, und wobei $f_{0,r}$ die Mittenfrequenz der r-ten Rampe und $v_{0,r}$ die Relativgeschwindigkeit des Radarobjektes am Mittenzeitpunkt der r-ten schnellen Rampe ist. Die ermittelte Frequenzlage des Peaks entspricht somit einer linearen Beziehung zwischen der Relativgeschwindigkeit v und dem Abstand d des Radarobjektes. Diese Beziehung stellt eine erste Information über die Relativgeschwindigkeit und den Abstand des Radarobjektes dar. Sie ist insbesondere abhängig vom Rampenhub $F_{fast}$, der Rampendauer $T_{fast}$ und der Mittenfrequenz $f_{0,r}$ der schnellen Rampen.

Bei nicht zu hohen Relativgeschwindigkeiten v und Beschleunigungen eines Radarobjektes ergibt sich über die Folge der schnellen Rampen annähernd dieselbe Frequenzlage des Peaks, und im folgenden soll $k_0$ diesen mittleren Frequenzbin des Radarobjektes über alle schnellen Rampen der Folge bezeichnen.

Die dem Peak zugeordnete Phase $\chi_{bb}(k_0)$ bei der Frequenzlage $k_0$ ist besonders empfindlich für Veränderungen des Abstandes des Radarobjektes während des Durchlaufens der Folge schneller Rampen. So ergibt eine Abstandsveränderung um die halbe Wellenlänge des Radarsignals bereits eine Phasenverschiebung um eine ganze Periode der Schwingung.

Fig. 4 zeigt schematisch mit einer durchgezogenen Linie den einer harmonischen Schwingung entsprechenden zeitlichen Verlauf des Realteils des Spektrums

$$A_{bb} * \cos \chi_{bb}(k_o)$$

bei der Frequenzlage $k_0$ des Radarobjektes in den Frequenzspektren während des Verlaufs der Folge der schnellen Rampen. Die dargestellte harmonische Schwingung entspricht dabei einem Fall ohne Beschleunigung des Radarobjektes.

Bei einer Radarsignalfrequenz von etwa 76 GHz ist die Wellenlänge etwa 4 mm. Bei einer Relativgeschwindigkeit von 86 km/h, entsprechend 24 m/sec, ändert sich die Phase somit mit einer Frequenz von 12000 Hz. Ein dieser Frequenz entsprechender Peak wird im Frequenzspektrum des zeitlichen Verlaufs des Realteils erwartet, wobei der zeitliche Verlauf den aufeinanderfolgenden schnellen Rampen entspricht; jede Rampe entspricht einem Abtastwert des zeitlichen Verlaufs. Wird durch eine zu niedrige Abtastfrequenz der Phasenänderungen, d.h. eine zu große Rampenfolgezeit $T_{r2r}$, das Nyquist-Shannon-Abtasttheorem verletzt, so kann die Frequenz der Phasenänderungen nicht eindeutig bestimmt werden. Fig. 4 zeigt schematisch eine derartige Unterabtastung. Die Werte des Realteils an den Mittenzeitpunkten der jeweiligen schnellen Rampen sind markiert. Die durch eine Fourier-Analyse, beispielsweise eine Berechnung einer FFT, bestimmte Frequenz der Phasenänderungen bei der Frequenzlage des Radarobjektes in den Frequenzspektren der schnellen Rampen ist daher mehrdeutig. Unter einer Fourier-Analyse wird dabei insbesondere die Berechnung wenigstens eines Fourier-Koeffizienten einer Fourier-Reihe verstanden.

Die Frequenzlage der der Phasenänderung entsprechenden harmonischen Schwingung kann angegeben werden durch ihren Frequenzbin $l_0$ und setzt sich näherungsweise additiv zusammen aus einem zum mittleren Abstand d und zum Rampenhub $F_{sLow}$ der langsamen Rampe proportionalen Term und einem Term, der zur mittleren Relativgeschwindigkeit v, der Rampendauer $T_{slow}$ der langsamen Rampe und der Mittenfrequenz $f_0$ der langsamen Rampe proportional ist. Dies entspricht wiederum einer FMCW-Gleichung für die langsame Rampe:

$$l_0 = (2/c)\,(d\,F_{slow} + v\,T_{slow}\,f_o).$$

Aus der ermittelten Frequenzlage ergibt sich somit im allgemeinen Fall, d.h. mit einem Rampenhub der langsamen Rampe $F_{slow} \neq 0$, eine lineare Beziehung zwischen der Relativgeschwindigkeit und dem Abstand des Radarobjektes, die allerdings hinsichtlich der Relativgeschwindigkeit v und des Abstands d mehrdeutig ist. Diese Beziehung stellt zweite Information über die Relativgeschwindigkeit und den Abstand des Radarobjektes dar. Im speziellen Fall $F_{slow} = 0$ wird im folgenden dennoch von einer langsamen Rampe gesprochen; diese hat die Steigung 0 und ergibt zweite Information lediglich über die Geschwindigkeit v. Diese ist hinsichtlich der Relativgeschwindigkeit v eindeutig bis auf ganzzahlige Vielfache des Produktes aus der halben Wellenlänge und der Abtastfrequenz $1/T_{r2r}$ der langsamen Rampe.

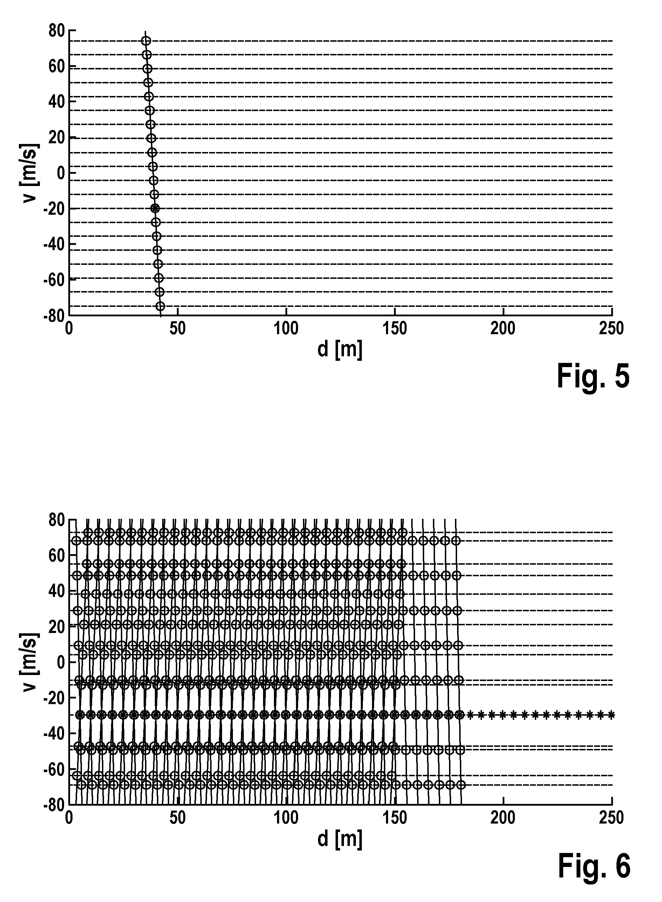

Fig. 5 zeigt beispielhaft die sich aus der Auswertung des Messsignals zu einer Folge von Frequenzrampen ergebende Information über die Relativgeschwindigkeit v und den Abstand d. Die Parameter der Frequenzmodulation sind die folgenden: $F_{fast} = 425$ MHz, $F_{fast} = 0,25$ ms, jede schnelle Rampe wird abgetastet an $N_{fast} = 512$ Abtastzeitpunkten, der Frequenzhub der langsamen Rampe ist $F_{slow} = 0$, der zeitliche Abstand der schnellen Rampen ist $T_{r2r} = 0,25$ ms, die Anzahl der schnellen Rampen, d.h. die Anzahl der Abtastzeitpunkte der langsamen Rampe, ist $N_{slow} = 16$, so dass sich eine Zeitdauer der langsamen Rampen von $T_{slow} = 4$ ms ergibt. Das erfasste Radarobjekt hat einen Abstand von d = 40 m und eine Relativgeschwindigkeit v = -20 m/s.

Aus der Auswertung eines Frequenzspektrums eines Teilsignals ergibt sich eine gegenüber der Vertikalen geneigte Gerade, entsprechend einer linearen Beziehung zwischen der Relativgeschwindigkeit v und dem Abstand d. Da der Rampenhub der langsamen Rampe $F_{slow} = 0$ beträgt, ergibt sich aus der Fourier-Analyse der Werte der Frequenzspektren der Teilsignale bei der Frequenzlage $k_0$ des Radarobjektes ein mehrdeutiger Wert für die Relativgeschwindigkeit v, entsprechend den in konstantem Abstand zueinander liegenden, horizontalen, gestrichelt eingezeichneten Linien im Diagramm in Fig. 5. Dieser mehrdeutige Wert stellt die zweite Information über die Relativgeschwindigkeit dar. Durch Verknüpfen der ersten Information mit der zweiten Information unter Berücksichtigung der genannten Mehrdeutigkeit ergeben sich potentielle Wertepaare (v,d). Diese sind in Fig. 5 mit Kreisen gekennzeichnet, die einen Toleranzbereich für die Vornahme des Abgleichs veranschaulichen. Das echte Ziel bei v = -20 m/s ist durch einen Stern markiert.

Eine Eindeutigkeit der Ermittlung von Relativgeschwindigkeit und Abstand des Radarobjekts kann hergestellt werden, indem weitere erste Information über Relativgeschwindigkeit und Abstand und/oder weitere zweite Information über Relativgeschwindigkeit und optional Abstand berücksichtigt wird.

Fig. 6 veranschaulicht schematisch eine eindeutige Bestimmung von Relativgeschwindigkeiten und Abständen von Radarobjekten bei Verwendung zweier unterschiedlicher Modulationsmuster in jeder Modulationsperiode.

Die Parameter des ersten Modulationsmusters sind die folgenden: $F_{fast} = 425$ MHz, $T_{fast} = 0,10$ ms, $N_{fast} = 1024$, $F_{sLow} = 0$, $T_{r2r} = 0,10$ ms, $N_{slow} = 32$, so dass sich $T_{slow} = 3,2$ ms ergibt.

Die Parameter des zweiten Modulationsmusters sind die folgenden: $F_{fast} = -250$ MHz, $T_{fast} = 0,115$ ms, $N_{fast} = 512$, $F_{sLow} = 0$, $T_{r2r} = 0,115$ ms, $N_{slow} = 32$, so dass sich $T_{slow} = 3,68$ ms ergibt.

Bei diesem Beispiel wird angenommen, dass eine Reihe von Radarobjekten bei einer Relativgeschwindigkeit von v = -30 m/s im Abstandsbereich von d = 5 m bis d = 250 m vorhanden sind, wobei die Radarobjekte jeweils einen Abstand von 5 m zueinander haben. Es kann sich beispielsweise um stehende Ziele handeln, auf die sich das eigene Kraftfahrzeug mit einer Geschwindigkeit von 30 m/s zu bewegt.

Die lineare Beziehungen zwischen v und d unterscheiden sich für die beiden Modulationsmuster. Das erste Modulationsmuster liefert eine Schar paralleler, fallender Geraden, je eine Gerade für jedes Objekt. Entsprechend liefert das zweite Modulationsmuster liefert eine Schar steigender Geraden. Weiterhin haben die aus den beiden Modulationsmustern ermittelten zweiten Informationen über die Geschwindigkeit v des Radarobjektes verschiedene Mehrdeutigkeitsweiten.

In Fig. 6 sind die Schnittpunkte der Geraden wie in Fig. 5 mit Kreisen gekennzeichnet. Der Abgleich der aus den beiden Modulationsmustern erhaltenen Signale erfolgt dadurch, dass man diejenigen Werte für die Relativgeschwindigkeit v und den Abstand d sucht, für welche die von den beiden Modulationsmustern gelieferten Geradenschnittpunkte am besten übereinstimmen. Im gezeigten Beispiel erhält man so für alle Objekte die Relativgeschwindigkeit v = -30 m/s.

Die Kette der stehenden Radarobjekte bei einer Relativgeschwindigkeit von v = -30 m/s kann aufgelöst und bis zu einem Abstand von 150 m detektiert werden.

Um das Verfahren robuster gegenüber Situationen zu machen, in denen mehrere Objekte, die unterschiedliche Relativgeschwindigkeiten haben, gleichzeitig geortet werden, ist es zweckmäßig nicht nur mit zwei unterschiedlichen Modulationsmustern zu arbeiten, sondern mit mindestens drei unterschiedlichen Modulationsmustern je Modulationsperiode. Beispielsweise könnte man mit ineinander verschachtelten Modulationsmustern arbeiten, so dass auf einen Chirp des ersten Modulationsmusters zunächst je ein Chirp des zweiten und dritten Modulationsmusters folgen, bevor der nächste Chirp des ersten Modulationsmusters folgt. Der Abgleich der Signale und die Berechnung der Abstände und Relativgeschwindigkeiten müsste dann jeweils am Ende der Modulationsperiode erfolgen, so dass die Dauer der Modulationsperiode zugleich die Zykluszeit, also die Dauer des Messzyklus wäre.

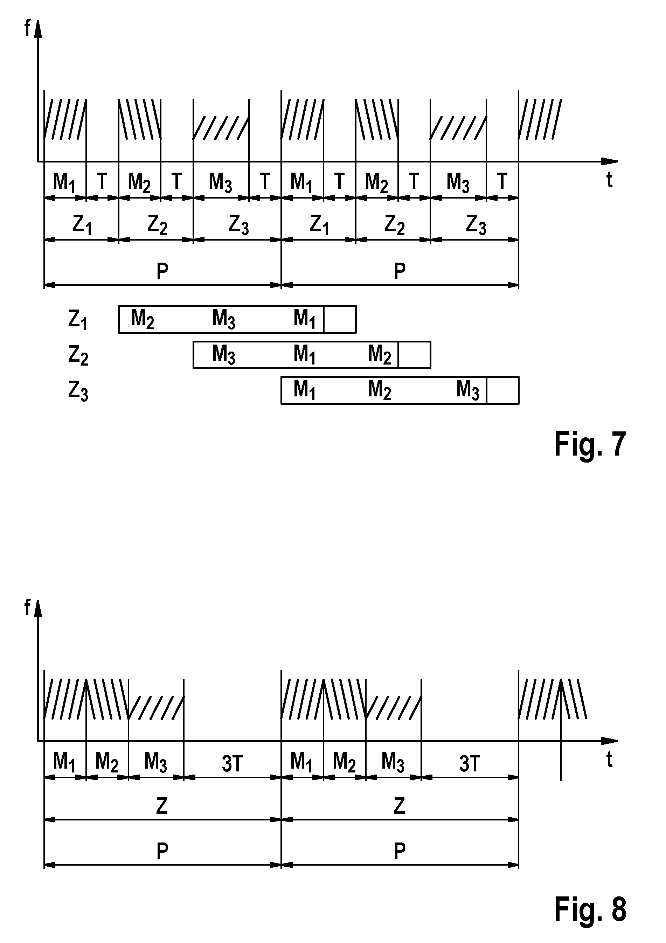

Um eine kürzere Zykluszeit zu erreichen, wird jedoch erfindungsgemäß mit einem anderen Zyklusschema gearbeitet, dass in Fig. 7 dargestellt ist. Dort ist die Frequenz f des Sendesignals für zwei komplette Modulationsperioden P gegen die Zeit t aufgetragen. In jeder Modulationsperiode P wird die Frequenz gemäß drei verschiedenen Modulationsmustern $M_1$, $M_2$ und $M_3$ moduliert. An jedes Modulationsmuster schließt sich ein Rechenzeitintervall der Länge T an, innerhalb dessen das für das betreffende Modulationsmuster erhaltene Basisbandsignal ausgewertet wird.

Innerhalb jedes Rechenzeitintervalls erfolgt außerdem ein Abgleich der Ergebnisse, die man für die letzten drei Modulationsmuster erhalten hat. In Fig. 7 ist dies symbolisch für die Rechenzeitintervalle in der zweiten Modulationsperiode dargestellt. Diese Modulationsperiode enthält drei Messzyklen $Z_1$, $Z_2$ und $Z_3$. Im Zyklus $Z_1$ wird das Ergebnis (die Schar von Geraden im v-d-Diagramm), das man für das Modulationsmuster $M_1$ im aktuellen Messzyklus erhalten hat, mit den Ergebnissen abgeglichen, die man für die Modulationsmuster $M_2$ und $M_3$ in den beiden vorangegangenen Messzyklen (innerhalb der vorangegangenen Modulationsperiode P) erhalten hat. Durch diesen Abgleich erhält man so für jedes Objekt ein eindeutiges Wertepaar für Abstand und Relativgeschwindigkeit, das am Ende dieses Messzyklus ausgegeben werden kann. Entsprechend wird in Zyklus $Z_2$ das Ergebnis, das man für das Modulationsmuster $M_2$ in diesem Zyklus erhalten hat, mit dem Ergebnis für das unmittelbar vorangehende Modulationsmuster $M_1$ und das diesem vorangehende Modulationsmuster $M_3$ abgeglichen. Analog verfährt man auch für Zyklus $Z_3$.

Auf diese Weise erhält man aktualisierte Werte für den Abstand und die Relativgeschwindigkeit jedes Objekts schon nach einer Zykluszeit, die sich nur aus der Dauer eines einzelnen Modulationsmusters und der Rechenzeit T zusammensetzt.

Zum Vergleich zeigt Fig. 8 ein Zyklusschema für ein herkömmliches Verfahren, bei dem die Zykluszeit, also die Dauer eines Messzyklus Z, mit der Dauer der Modulationsperiode P übereinstimmt und man in jedem Messzyklus die Ergebnisse für die drei Modulationsmuster $M_1$, $M_2$ und $M_3$ miteinander abgleicht, die in derselben Modulationsperiode P liegen. Die drei Modulationsmuster sind hier nicht verschachtelt, sondern folgen nacheinander. Das Rechenzeitintervall hat hier die Länge 3T, da nach dem Eingang aller Daten alle drei Modulationsmuster ausgewertet werden müssen.

Man erkennt, das die Zykluszeit in Fig. 8 deutlich größer ist als jede der Zykluszeiten, bei dem erfindungsgemäßen Verfahren gemäß Fig. 7.

In dem in Fig. 7 gezeigten Beispiel haben die Zyklen $Z_2$ und $Z_3$ unterschiedliche Dauern weil auch die zugehörigen Modulationsmuster $M_2$ und $M_3$ etwas unterschiedliche Dauern haben. In der Praxis wird man es jedoch im allgemeinen so einrichten, dass alle Messzyklen die gleiche Dauer haben. Dabei ist zu berücksichtigen, dass die Anzahl der schnellen Rampen je Modulationsmuster in der Praxis deutlich größer sein wird als in dem vereinfachten Beispiel, das hier dargestellt wurde. Unterschiedliche Dauern der schnellen Rampen lassen sich dann dadurch ausgleichen, dass die Anzahl der schnellen Rampen innerhalb der langsamen Rampe angepasst wird.

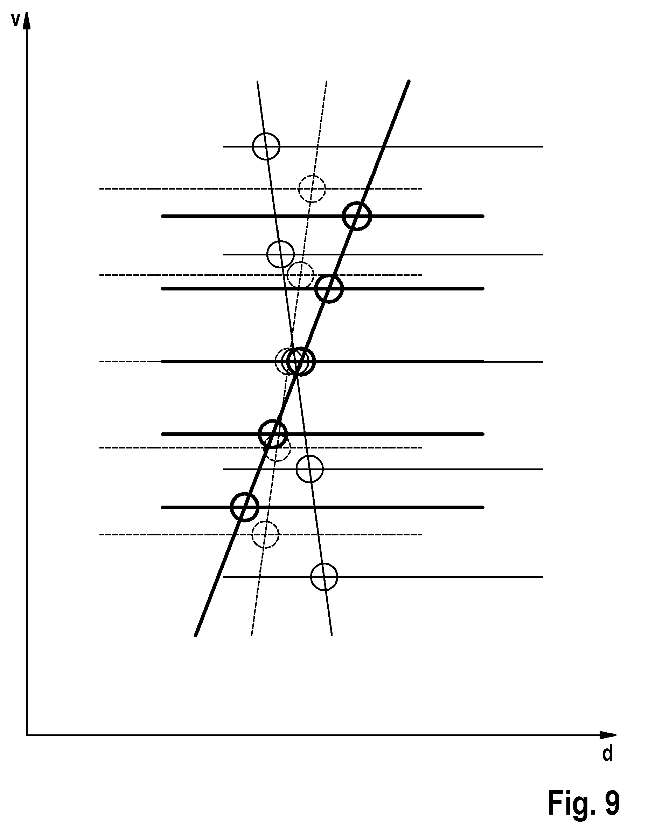

Das erfindungsgemäße Verfahren hat allerdings zur Folge, dass die zeitlichen Abstände zwischen den einzelnen Modulationsmustern $M_1$, $M_2$ und $M_3$ etwas größer sind als beim Stand der Technik. Dementsprechend können insbesondere bei den Abständen etwas größere Unterschiede von Messzyklus zu Messzyklus auftreten. Dieser Effekt ist in Fig. 9 illustriert, wo für ein einzelnes Objekt die Ergebnisse, die man für drei verschiedene Modulationsmuster erhält, in einem v-d-Diagramm dargestellt sind. Da sich der Abstand d im Laufe der drei Messzyklen, innerhalb derer diese Daten gewonnen wurden, geändert hat, sind die entsprechenden Geraden etwas längs der d-Achse gegeneinander verschoben, so dass auch bei der Relativgeschwindigkeit, bei der zwischen den Geradenschnittpunkten die beste Übereinstimmung besteht, noch eine gewisse Abweichung in d-Richtung vorhanden ist. Dennoch lässt sich die Relativgeschwindigkeit, bei der die beste Übereinstimmung besteht, deutlich von den anderen in Frage kommenden Relativgeschwindigkeiten unterscheiden, so dass die Verlässlichkeit des Verfahrens nicht beeinträchtigt wird. Zur Kontrolle lässt sich der zu erwartende Versatz der Geradenschnittpunkte auch anhand der Relativgeschwindigkeit berechnen, die aus den vorangegangenen Messzyklen bekannt ist. Als "wahren" Wert für den Abstand d des Objekts wird man sinnvoller Weise den Geradenschnittpunkt nehmen, der zu dem jüngsten der drei Modulationsmuster gehört.

## Patentansprüche

1. Verfahren zur zyklischen Messung von Abständen (d) und Relativgeschwindigkeiten (v) von Objekten mit einem FMCW-Radarsensor, bei dem ein Sendesignal des Radarsensors periodisch in seiner Frequenz (f) moduliert wird, wobei jede Periode (P) mindestens zwei voneinander verschiedene Modulationsmuster ($M_1$, $M_2$, $M_3$) enthält, aus einem für ein einzelnes Modulationsmuster empfangenen Signal eine Beziehung zwischen Abstand (d) und Geschwindigkeit (v) des Objekts hergeleitet wird, und die für mehrere Modulationsmuster erhaltenen Signale miteinander abgeglichen werden um in jedem Messzyklus je einen Wert für den Abstand und die Geschwindigkeit zu bestimmen, wobei der Messzyklus definiert ist als der Zyklus, in dem je Objekt genau ein Wert für den Abstand und genau ein Wert für die Geschwindigkeit bestimmt wird, **dadurch gekennzeichnet, dass** man für den Abgleich des für ein Modulationsmuster ($M_1$) im aktuellen Messzyklus ($Z_1$) erhaltenen Signals mit dem oder den für andere Modulationsmuster ($M_2$, $M_3$) erhaltenen Signalen auf die Signale aus mindestens einem früheren Messzyklus ($Z_2$, $Z_3$) zurückgreift.

2. Verfahren nach Anspruch 1, bei dem jedes Modulationsmuster aus einer Folge von Modulationsrampen mit gleichem Hub und gleicher Dauer besteht.

3. Verfahren nach Anspruch 2, bei ein einzelnes Modulationsmuster mehrere aufeinanderfolgende Frequenzrampen umfasst und bei dem aus dem Signal für ein einzelnes Modulationsmuster anhand von Phasenunterschieden zwischen den Signalen, die den aufeinanderfolgenden Frequenzrampen entsprechen, ein Satz von mehrdeutigen Werten für die Geschwindigkeit (v) bestimmt wird und die Mehrdeutigkeit durch Abgleich der von verschiedenen Modulationsmustern erhaltenen Signale beseitigt wird.

4. Verfahren nach einem der vorstehenden Ansprüche, bei dem die Anzahl der unterschiedlichen Modulationsmuster je Periode (P) mindestens drei beträgt.

5. Verfahren nach einem der vorstehenden Ansprüche, bei dem das Sendesignal innerhalb jedes Messzyklus ($Z_1$, $Z_2$, $Z_3$) gemäß genau einem Modulationsmuster ($M_1$, $M_2$, $M_3$) moduliert wird.

6. FMCW-Radarsensor mit einem Oszillator (10) zur Erzeugung eines Sendesignals, einer Frequenzmodulationseinrichtung (12) zur Frequenzmodulation des Sendesignals, einem Mischer (18) zum Mischen des Sendesignals mit einem nach Reflexion an einem Objekt empfangenen Signal, und einer Steuer- und Auswerteeinheit (14) zur Auswertung des als Mischprodukt erhaltenen Signals, welche Steuer- und Auswerteeinheit (14) eine digitale Signalverarbeitungseinheit (24) aufweist, **dadurch gekennzeichnet, dass** die Steuer- und Auswerteeinheit (14) das Verfahren nach einem der vorstehenden Ansprüche ausführt.

**Claims**

1. Method for cyclically measuring distances (d) and relative velocities (v) of objects using an FMCW radar sensor, in which a transmission signal from the radar sensor periodically has its frequency (f) modulated, wherein each period (P) contains at least two different modulation patterns ($M_1$, $M_2$, $M_3$), a relationship between distance (d) and velocity (v) of the object is derived from a signal received for a single modulation pattern, and the signals obtained for multiple modulation patterns are collated with one another in order to determine a value for each of distance and velocity in each measurement cycle, wherein the measurement cycle is defined as a cycle in which precisely one value for distance and precisely one value for velocity is determined for each object, **characterized in that** the collation of the signal obtained for a modulation pattern ($M_1$) in the current measurement cycle ($Z_1$) with the signal(s) obtained for other modulation patterns ($M_2$, $M_3$) involves resorting to the signals from at least one earlier measurement cycle ($Z_2$, $Z_3$).

2. Method according to Claim 1, in which each modulation pattern consists of a series of modulation ramps having the same travel and the same duration.

3. Method according to Claim 2, in which a single modulation pattern comprises multiple successive frequency ramps and in which a set of ambiguous values for velocity (v) is determined from the signal for a single modulation pattern on the basis of phase differences between the signals that correspond to the successive frequency ramps, and the ambiguity is removed by collating the signals obtained from different modulation patterns.

4. Method according to one of the preceding claims, in which the number of different modulation patterns per period (P) is at least three.

5. Method according to one of the preceding claims, in which the transmission signal is modulated within each measurement cycle ($Z_1$, $Z_2$, $Z_3$) in accordance with precisely one modulation pattern ($M_1$, $M_2$, $M_3$).

6. FMCW radar sensor having an oscillator (10) for generating a transmission signal, a frequency modulation device (12) for frequency modulation of the transmission signal, a mixer (18) for mixing the transmission signal with a signal received following reflection at an object, and a control and evaluation unit (14) for evaluating the signal obtained as a hybrid product, which control and evaluation unit (14) has a digital signal processing unit (24), **characterized in that** the control and evaluation unit (14) performs the method according to one of the preceding claims.

**Revendications**

1. Procédé de mesure cyclique d'écarts (d) et de vitesses relatives (v) d'objets avec un capteur radar FMCW, avec lequel la fréquence (f) d'un signal émis du capteur radar est modulée périodiquement, chaque période (P) contenant au moins deux modèles de modulation ($M_1$, $M_2$, $M_3$) mutuellement différents, une relation entre l'écart (d) et la vitesse (v) de l'objet étant déduite d'un signal reçu pour un modèle de modulation unique, et les signaux obtenus pour plusieurs modèles de modulation étant syntonisés les uns avec les autres afin de déterminer respectivement une valeur pour l'écart et la vitesse dans chaque cycle de mesure, le cycle de mesure étant défini comme le cycle dans lequel exactement une valeur pour l'écart et exactement une valeur pour la vitesse sont déterminées pour chaque objet, **caractérisé en ce que** la syntonisation du signal obtenu pour un modèle de modulation ($M_1$) dans le cycle de mesure actuel ($Z_1$) avec le ou les signaux obtenus pour d'autres modèles de modulation ($M_2$, $M_3$) s'effectue en ayant recours aux signaux issus d'au moins un cycle de mesure précédent ($Z_2$, $Z_3$).

2. Procédé selon la revendication 1, avec lequel chaque modèle de modulation se compose d'une séquence de rampes de modulation de même excursion et de même durée.

3. Procédé selon la revendication 2, avec lequel un modèle de modulation individuel comprend plusieurs rampes de fréquence successives et avec lequel un jeu de valeurs ambiguës pour la vitesse (v) est déterminé au moyen des différences de phase entre les signaux qui correspondent aux rampes de fréquence successives et l'ambiguïté est éliminée par la syntonisation des signaux obtenus des différents modèles de modulation.

4. Procédé selon l'une des revendications précédentes, dans lequel le nombre de modèles de modulation différents par période (P) est au moins égal à trois.

5. Procédé selon l'une des revendications précédentes, avec lequel le signal émis au sein de chaque cycle de mesure ($Z_1$, $Z_2$, $Z_3$) est modulé selon exactement un modèle de modulation ($M_1$, $M_2$, $M_3$).

6. Capteur radar FMCW comprenant un oscillateur (10) destiné à générer un signal émis, un dispositif de modulation de fréquence (12) destiné à moduler en fréquence le signal émis, un mélangeur (18) destiné à mélanger le signal émis avec un signal reçu après réflexion sur un objet, et une unité de commande et d'interprétation (14) destinée à interpréter le signal obtenu sous la forme d'un produit mélangé, ladite unité de commande et d'interprétation (14) possédant une unité de traitement de signal numérique (24), **caractérisé en ce que** l'unité de commande et d'interprétation (14) met en oeuvre le procédé selon l'une des revendications précédentes.

**Fig. 1**

**Fig. 2**

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6492938 B
- WO 0231529 A